# DEMANDE DE BREVET EUROPEEN

(11) **EP 2 845 565 A2**
(43) Date de publication de la demande: **11.03.2015**
(21) Numéro de dépôt: 14183440.8
(22) Date de dépôt: 03.09.2014
(51) Int. Cl.: A61C 13/093, A61C 13/36

(54) **Prothèse dentaire sur implant comprenant une armature maintenant au moins une dent artificielle et procédé de réalisation d'une telle prothèse**

(30) Priorité: 05.09.2013 FR 1302056
(71) Demandeur: Arcadia, 03310 Neris les Bains (FR)
(72) Inventeur: Moreau, Sébastien, 03310 NERIS LES BAINS (FR)
(74) Mandataire: Perrier, Jean-Pierre

(57) **Abrégé**

Prothèse dentaire sur implant constituée d'une armature maintenant au moins une dent artificielle (1) qui est fixée sur un implant et qui comprend une cavité ouverte (2) sur sa face palatine (3) et au moins une découpe (9) ménagée dans au moins une face (8), dite proximale, de la dent (1). La découpe (9) définit un passage continu entre les cavités (2) de deux dents artificielles (1) voisines dont les découpes (9) sont en regard. Dans cette configuration, les cavités (2) et les découpes des deux dents (1) voisines définissent ensemble un logement de réception d'une partie du matériau constitutif de l'armature lorsque lesdites dents artificielles (1) sont en position sur l'armature. L'invention concerne également un procédé de réalisation d'une prothèse dentaire sur implant avec au moins une telle dent.

## Description

La présente invention concerne une prothèse dentaire sur implant constituée d'une armature maintenant au moins une dent artificielle. L'invention concerne également un procédé de réalisation d'une prothèse à l'aide de telles dents.

Une prothèse dentaire est un appareil destiné à remplacer, chez un être humain, une ou plusieurs dents lorsque celle(s)-ci est (sont) absente(s) ou détériorée(s). L'implantologie est une technique particulière qui concerne le remplacement d'une ou plusieurs dent(s) par une ou des dent(s) artificielle(s) recouvrant une armature épousant l'arcade dentaire, la ou les dent(s) artificielle(s) étant fixée(s) sur un ou des implant(s) dentaire(s). Un implant dentaire est une racine artificielle, généralement en titane ou en un alliage de titane, inséré de manière définitive dans l'os maxillaire ou mandibulaire. Pour mémoire, le terme maxillaire se rapporte à l'arcade dentaire supérieure et le terme mandibulaire à l'arcade dentaire inférieure. Les deux arcades, c'est-à-dire le maxillaire et la mandibule, définissent ensemble la mâchoire d'un être humain ou d'un animal.

Par la suite, il sera fait référence à une prothèse destinée à un être humain, adulte ou enfant, étant entendu que l'invention peut être appliquée au domaine vétérinaire.

La technique de l'implantologie, de plus en plus employée, permet de reproduire, le plus fidèlement possible, la dentition du patient en alliant l'aspect esthétique et l'aspect fonctionnel du fait que ce type de prothèse se rapproche de la structure d'une dent naturelle pourvue d'une racine et insérée dans une arcade dentaire. Une dent artificielle est généralement en céramique, en résine artificielle ou en un matériau composite à base de polymères, de céramiques ou d'autres matériaux connus en soi. Le procédé de réalisation d'une telle prothèse est basé sur un modèle en plâtre qui constitue la réplique exacte de la bouche du patient avec des implants. Sur cette réplique, on positionne des dents artificielles préfabriquées qui correspondent aux dents manquantes, cela en termes de dimensions, de formes et de teintes. Un moulage en silicone des dents en position forme une clé de montage. Cette clé permet de réaliser une armature de maintien d'une prothèse sur l'arcade dentaire concernée. Cette armature épouse les contours de la zone de montage de la prothèse sur l'arcade dentaire en assurant une mise en place optimale des dents artificielles et en permettant des mouvements de la mâchoire identiques à ceux effectués avec une dentition naturelle, notamment en terme de mastication.

Il est à noter qu'une personne pourvue d'une prothèse dentaire sur implant n'a plus de moyen d'appréciation de la pression qu'elle exerce sur la prothèse, du fait de l'absence de dent naturelle. Ainsi, la personne a tendance à exercer une pression maximale avec ses dents artificielles lors des mouvements de mastication. Ceci implique qu'une prothèse dentaire doit présenter une résistance mécanique supérieure à celle des dents naturelles et être d'une construction précise. Pour cela, il est nécessaire d'éviter d'avoir trop ou pas assez d'espacement entre les dents artificielles et l'armature qui les porte. En effet, le matériau cosmétique, c'est-à-dire le matériau constitutif de la partie visible de la prothèse sur implant, doit être soutenu mécaniquement au niveau de chaque cuspide dentaire. L'armature, quant à elle, doit suivre le plus précisément possible la configuration géométrique de chaque dent à remplacer tout en laissant un espace optimal au matériau cosmétique choisi.

La réalisation de telles prothèses nécessite une qualification professionnelle élevée du fait qu'un soin particulier lors de la fabrication des divers éléments constitutifs de la prothèse est requis. Un apprentissage de plusieurs années est nécessaire pour maitriser la fabrication de telles prothèses. De plus, le temps de fabrication et le nombre d'éléments mis en oeuvre lors de la fabrication d'une telle prothèse génèrent un prix de vente élevé, ce qui freine le développement de cette technique de remplacement dentaire.

Il existe donc un besoin de réalisation d'une prothèse de manière rapide et à coût maitrisé, quelle que soit l'expérience du professionnel, cela tout en préservant les caractéristiques mécaniques et esthétiques de la prothèse. On connait par EP-A-1 568 335, WO-A-2011 066 895, WO-A-2011 091 382, EP-A-1 062 916 des solutions visant à faciliter la réalisation de telles prothèses. Ces solutions font soit appel à une numérisation et une modélisation en 3D, soit à des dispositifs d'amélioration de l'ancrage pour la réalisation de dents artificielles. On connait également par WO-A-2004 078 060 une dent artificielle pourvue d'une gorge facilitant son maintien lors de la réalisation d'une prothèse dentaire mais qui n'est pas sur implant. L'état de la technique propose des solutions complexes à mettre en oeuvre et/ou nécessitant une qualification professionnelle élevée. Par ailleurs, ces solutions ne sont pas adaptées spécifiquement à une prothèse sur implant. La présente invention vise à proposer une dent artificielle d'une mise en oeuvre aisée, permettant la réalisation de prothèse de manière rapide et à coût maitrisé, cela sans requérir une qualification professionnelle élevée.

A cet effet, l'invention a pour objet une prothèse dentaire sur implant constituée d'une armature maintenant au moins une dent artificielle qui est fixée sur un implant et qui comprend une cavité ouverte sur sa face palatine et au moins une découpe ménagée dans au moins une face, dite proximale, de la dent, caractérisée en ce que ladite découpe définit un passage continu entre les cavités de deux dents artificielles voisines dont les découpes sont en regard et en ce que, dans cette configuration, les cavités et les découpes des deux dents voisines définissent ensemble un logement de réception d'une partie du matériau constitutif de l'armature lorsque lesdites dents artificielles sont en position sur l'armature.

La présence dans une dent artificielle d'une cavité pouvant communiquer avec une cavité ménagée dans une autre dent artificielle similaire, grâce aux découpes respectives des faces proximales des dents en regard, permet de réaliser, par des techniques connues, une armature dont le matériau constitutif occupe de façon optimale les volumes des cavités et des passages ainsi définis. On obtient ainsi une armature homogène, sans faille ni faiblesse. Une telle armature est parfaitement adaptée aux dents artificielles qu'elle maintient. En effet, les espaces inter-dentaires sont optimaux car définis par les dents en position, avant que l'armature ne soit réalisée. En d'autres termes, de telles dents définissent elles-mêmes la configuration de l'armature. Cette dernière est donc optimale, sans reprise ou retouche, les dents artificielles et les espaces inter-dentaires étant conformes aux aspects esthétique et fonctionnel définis.

Selon des aspects avantageux mais non obligatoires une telle dent peut comprendre au moins une des caractéristiques suivantes :
- les deux faces proximales de la dent sont pourvues de découpes.
- Chaque découpe est à fond arrondi, l'ouverture de la découpe étant située sur la face palatine de la dent.
- Les bords de chaque découpe forment un angle voisin de 6°.

L'invention concerne également un procédé de réalisation d'une prothèse dentaire sur implant avec au moins une dent artificielle maintenue sur une armature, conforme à une des caractéristiques précédentes et comportant au moins les étapes suivantes :
- a) positionner au moins deux dents artificielles sur un modèle de travail d'une arcade dentaire d'un patient à équiper d'une prothèse, le modèle étant pourvu d'au moins un implant,
- b) à l'aide d'un premier matériau de moulage, mouler sur les dents en position sur le modèle de travail au moins un élément dit clé vestibulaire,
- c) placer les dents dans la clé vestibulaire précédemment moulée,
- d) combler à l'aide d'un matériau de comblement les cavités et les découpes des dents voisines afin de réaliser un modèle d'armature homogène dont les espaces inter-dentaires sont prédéfinis par les cavités et les découpes des dents voisines,
- e) réaliser l'armature définitive à partir du modèle d'armature précédemment réalisé.
Un tel procédé permet de façon simple, en minimisant et en optimisant les opérations de reprise et d'ajustement de réaliser une armature qui préserve l'aspect naturel de la prothèse tout en optimisant les caractéristiques mécaniques de la prothèse, du fait que la configuration de l'armature est déterminée par les dents qu'elle maintiendra.

Selon des aspects avantageux mais non obligatoires, un tel procédé peut incorporer une ou plusieurs des étapes suivantes :
- lors de l'étape a), les dents sont positionnées avec leurs faces, pourvues des découpes, en regard.
- lors de l'étape d), le matériau de comblement est une résine photo-polymérisable.
- Après l'étape b) et avant l'étape c), on moule lors d'une étape supplémentaire f), un deuxième élément des faces intérieure et extérieure de l'arcade dentaire.
- Après l'étape e), on monte, lors d'une étape supplémentaire g), au moins une dent artificielle sur l'armature.
- Lors de l'étape g) on utilise le second élément moulé lors de l'étape f) pour monter au moins une dent artificielle en céramique pressée.
- Lors de l'étape g) on colle au moins une dent artificielle en céramique naturelle sur l'armature.

L'invention sera mieux comprise et d'autres avantages de celle-ci apparaitront plus clairement à la lecture de la description qui va suivre de l'invention, donnée à titre d'exemple et faite en référence aux dessins suivants dans lesquels:
- La figure 1 est une vue en perspective d'une dent artificielle conforme à l'invention,
- la figure 2 est une vue en perspective, partielle et à plus petite échelle, d'un modèle de travail d'une arcade dentaire à équiper de plusieurs dents artificielles,
- la figure 3 est une vue en perspective d'une clé vestibulaire réalisée par moulage de dents conformes à l'invention, positionnées sur le modèle de travail de la figure 2, les dents étant en place dans la clé vestibulaire,
- la figure 4 est une vue en perspective, à une autre échelle, d'un modèle d'armature obtenu avec des dents conformes à l'invention,
- la figure 5 est une vue en perspective, partielle et à une autre échelle, de dents conformes à l'invention en place sur un modèle de travail lors de la réalisation du modèle d'armature et
- la figure 6 est une vue en perspective, à plus petite échelle que la figure 5, d'une prothèse dentaire finie, avec une armature fabriquée conformément au procédé de l'invention et prête à être fixée sur des implants en place dans la bouche d'un patient.

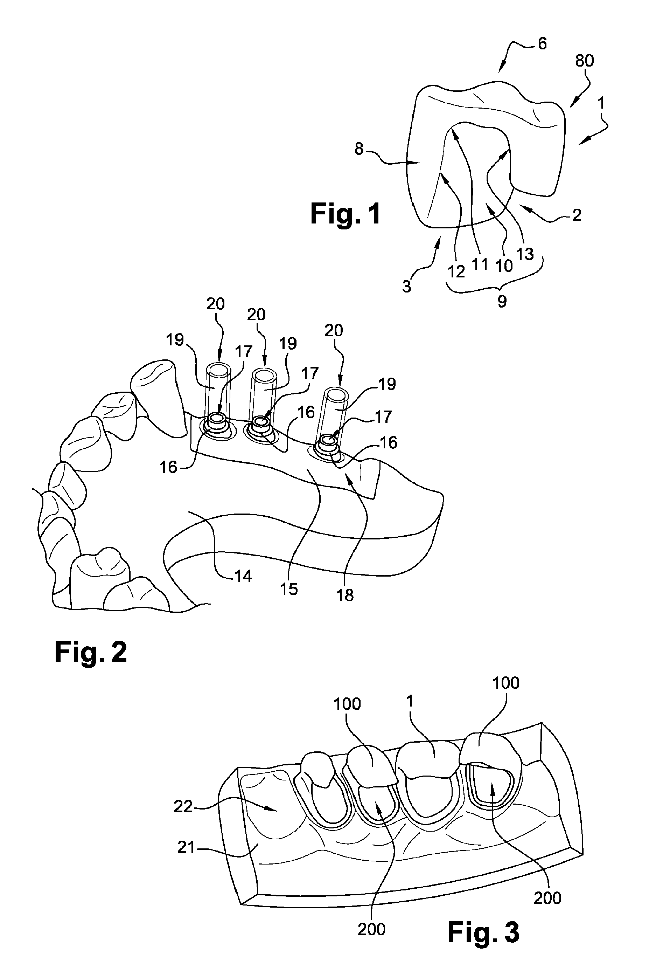

La figure 1 représente une dent artificielle 1 conforme à l'invention. Sauf mention contraire, le terme dent sera préférentiellement utilisé par la suite pour désigner une dent artificielle.

En l'espèce, la dent 1 illustrée à la figure 1 est une prémolaire, étant entendu que tous les types de dents, à savoir canines, incisives, prémolaires et molaires, sont réalisés de manière similaire, conformément à l'invention, quelles que soient la taille et /ou la teinte des dents, qu'elles soient destinées à un adulte ou un enfant, voire à un animal.

La dent 1 est réalisée en un matériau présentant des caractéristiques esthétiques similaires à celles des dents naturelles. Avantageusement, elle est en céramique, en résine ou en composite.
En variante, elle est en nano-composite ou un autre matériau, connu en soi, qui permet d'obtenir une dent artificielle proche de la dent naturelle correspondante.

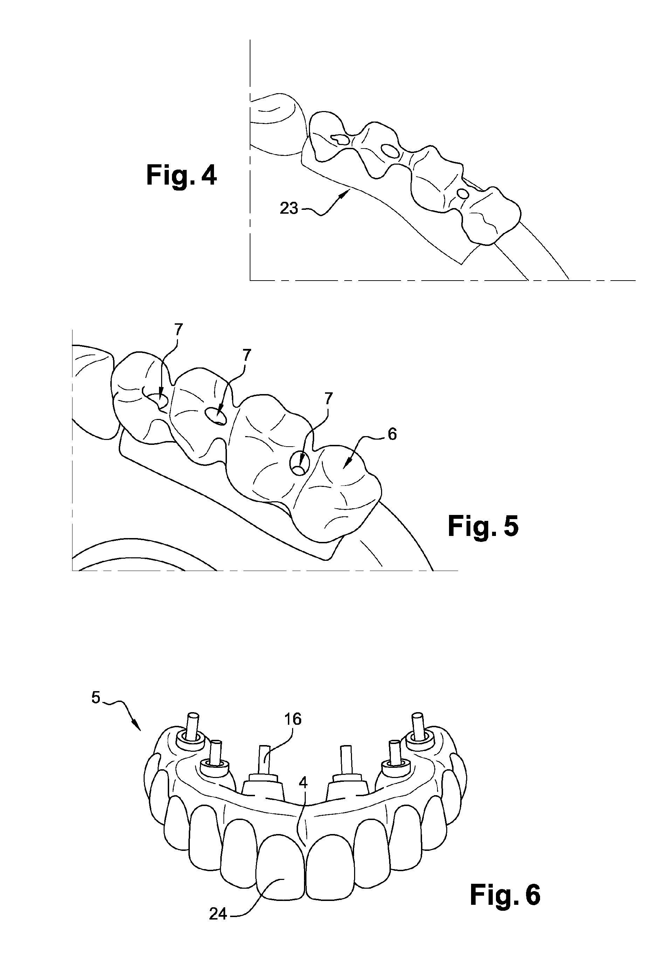

Une dent artificielle 1 conforme à l'invention comprend une cavité ouverte 2 sur une face 3, dite face palatine, de la dent 1, c'est-à-dire une cavité 2 ouverte sur la face 3 de la dent 1 destinée à être en appui sur l'armature 4 de la prothèse 5 comme illustré à la figure 6.

La face 6, dite face occlusale, opposée à la face palatine 3, est destinée à être en regard de l'autre arcade dentaire. Elle est d'un aspect proche de la face libre de la dent naturelle que doit remplacer la dent artificielle 1. Cette face 6 est pourvue d'un orifice 7 de forme et de dimensions adaptées pour le passage d'une vis de fixation de la prothèse 5 dans l'arcade dentaire du patient. Cet orifice 7 est visible à la figure 5.

Les dimensions de la cavité 2 sont adaptées aux dimensions nominales et à la forme de la dent 1 ainsi qu'au matériau choisi. Le volume de la cavité 2 prend également en compte la position et/ou la fonction de la dent 1. En d'autres termes, le volume de la cavité 1 est également adapté aux contraintes de fixation de la dent sur l'armature, ces contraintes étant régies par la fonction de la dent et donc par la résistance mécanique que doit présenter cette dernière. De plus, la cavité 2 de chaque dent 1 est dépourvue de contredépouille.

Sur au moins une face 8 de la dent 1, dite face proximale et destinée, par exemple, à être en regard avec une face 80 similaire d'une autre dent artificielle 1 lorsque deux dents artificielles sont voisines, une découpe 9 est ménagée. Cette découpe 9 est à fond arrondi et de forme adaptée à la morphologie de la dent concernée. Ici, la découpe est globalement configurée en U. L'ouverture 10 de la découpe 9 est située sur la face palatine 3 de la dent 1. Le fond arrondi 11 de la découpe 9 est à proximité de la face occlusale 6 de la dent 1. Les bords 12, 13 de la découpe 9, c'est-à-dire les branches du U, forment un angle ouvert, permettant d'éviter, dans tous les cas, une contre dépouille. Dans l'exemple, l'angle est d'environ 6°.

Une telle configuration permet, lorsqu'au moins deux dents artificielles 1, 100 sont voisines sur une même arcade dentaire, de définir un passage continu entre les cavités 2, 200 respectives des dents 1, 100. Compte tenu des dimensions et de la configuration géométrique des ouvertures 10, des découpes 9 et des volumes des cavités 2, 200 des dents artificielles 1, 100 lorsqu'elles sont voisines, on définit un logement de réception d'une partie de l'armature 4 répartie sur au moins deux dents 1, 100.

En d'autres termes, la partie visible de chaque dent 1, 100 forme, de facto, un revêtement esthétique de l'armature 4, imitant une dentition naturelle. C'est l'armature 4, également appelé bridge, qui, par sa configuration et sa continuité entre les dents 1, 100, assure les caractéristiques mécaniques et fonctionnelles de l'ensemble. L'armature a ainsi une configuration parfaitement adaptée aux dents montées sur la prothèse, du fait que le matériau constitutif de l'armature occupe de façon optimale les logements définis par les cavités et les passages entres des dents voisines. On obtient une armature homogène, sans faiblesse structurelle, les espaces inter-dentaires étant déterminés, de facto, par les logements formés par les cavités et les découpes des dents voisines.

Lorsqu'une dent artificielle 1, 100 conforme à l'invention est en regard d'une dent naturelle ou lorsqu'elle est située à une extrémité d'une arcade dentaire, une seule découpe 9 peut être ménagée, si besoin, dans la face proximale 8 ou 80 de la dent artificielle 1 ou 100.

La réalisation de dents 1, 100 conformes à l'invention est effectuée, de façon avantageuse mais non exclusivement, à partir de dents artificielles préfabriquées connues et commercialisées avec une cavité 2, 200. Les dents objets de l'invention sont avantageusement réalisées en usine, les dents étant alors livrées prêtes à l'emploi. En variante, elles sont réalisées à façon sur site, par exemple par un prothésiste dentaire. Les dents sont réalisées par moulage ou par d'autres techniques connues en soi.

La réalisation d'une armature et d'une prothèse dentaire à l'aide de plusieurs dents 1, 100 conformes à l'invention est maintenant décrite en référence aux figures 2 à 5. Cet exemple n'est pas limitatif, le nombre, la fonction, les dimensions et/ou la position des dents artificielles sur une arcade dentaire pouvant être différents.

La figure 2 illustre un modèle de travail 14 reproduisant, partiellement, la bouche d'un patient édenté partiel. En l'espèce, il s'agit d'un modèle de travail reproduisant un maxillaire, c'est-à-dire une arcade dentaire supérieure.

Des implants 16, identiques à ceux qui seront ou sont en place dans le maxillaire du patient, sont fixés dans la zone édentée 15, dans une position représentative de celle occupée par les implants 16 dans le maxillaire du patient. L'extrémité libre 17 de chaque implant 16 dépasse de la surface 18 de la zone édentée 15. Chaque extrémité 17 est creuse et pourvue d'un taraudage.

Des tubes creux 19, ici en polymère transparent, sont vissés de manière amovible sur les extrémités libres 17 des implants 16. Les volumes des tubes 19 définissent un passage pour des vis de fixation, non illustrées, de la prothèse 5, à savoir de l'ensemble formé par l'armature 4 et les dents 1, 100, dans le maxillaire du patient.

Un procédé de réalisation d'une armature conformément à l'invention est maintenant décrit, à titre d'exemple non limitatif.

Dans une première étape, on positionne sur un modèle de travail, tel le modèle 14 illustré à la figure 2, le nombre nécessaire de dents artificielles 1, 100 conformes à l'invention, par exemple au moins deux. Chaque dent 1, 100 est choisie selon la dent naturelle qu'elle doit remplacer. Le positionnement des dents 1, 100 est tel que chaque dent 1, 100 est sur l'extrémité libre 20 d'un tube 19 lui-même positionné sur l'extrémité libre 17 d'un implant 16. Lors de cette mise en place, l'orifice 7 de la face supérieure 6 de chaque dent 1, 100 est en regard de l'extrémité libre 20 du tube 19. Les dents 1 ; 100 sont positionnées de sorte que leurs faces proximales 8 ; 80 pourvues des découpes 9 soient en regard. Ainsi les découpes 9 assurent un passage entre les cavités 2 ; 200 des dents voisines. Dans cette configuration, les cavités 2 ; 200 et les découpes 9 des dents 1 ; 100 définissent un logement de réception du matériau constitutif de l'armature tout en définissant les espaces inter-dentaires, comme cela apparait à la figure 4.

Les dents 1, 100 étant positionnées sur le modèle 14, les espaces inter-dentaires sont optimisés. Pour cela, les espaces inter-dentaires doivent être suffisamment importants pour avoir un aspect naturel, en évitant l'apparence monobloc de plusieurs dents 1, 100 côte à côte. Les espaces inter-dentaires ne doivent pas être trop importants pour ne pas montrer l'armature 4 dans l'espace inter-dentaire et pour maintenir une résistance mécanique élevée de la prothèse 5.

On réalise ensuite une représentation des dents 1, 100 en place. Pour cela on effectue, par exemple, un moulage à l'aide d'un matériau connu en soi tel que du silicone, des dents 1, 100 et d'une partie du modèle 14. Ce moulage 21, effectué à partir de la face externe du maxillaire, est dénommé clé vestibulaire. Avantageusement, un autre moulage est réalisé. Ce second moulage couvre la totalité du modèle de travail 14, donc de l'arcade sur toutes ses faces, intérieure et extérieure. Ce second moulage, non illustré, constitue une seconde clé. Cette seconde clé est utilisée pour la réalisation de la prothèse 5 selon un autre mode de réalisation, les dents artificielles 1, 100 de la prothèse 5 étant alors dans un matériau différent de celui utilisé pour les dents artificielles 1, 100 utilisées pour réaliser le moulage de la clé vestibulaire 21. Dans un autre mode de réalisation, la représentation des dents en place est faite par numérisation en 3D.

Lorsque la clé 21 est réalisée, elle est séparée du modèle de travail 14. Les dents 1, 100 sont ôtées individuellement du modèle 14 et nettoyées avant d'être replacées dans leurs empreintes respectives 22 dans la clé 21, comme cela est illustré à la figure 3. Une fois les dents 1, 100 en place dans la clé 21, on comble les cavités et les ouvertures des dents avec un matériau de comblement adapté. Par exemple, il s'agit d'une résine photo polymérisable connue en soi.

On replace alors l'ensemble, à savoir la clé vestibulaire 21 avec les dents 1, 100 en place et les cavités 2, 200 et les découpes 9 remplies par la résine de comblement, sur le modèle de travail 14. On achève le comblement, par exemple avec la même résine, des zones dépourvues de résine et on ajuste le comblement, en particulier en périphérie des tubes 19.

Une fois le matériau de comblement durci, c'est-à-dire en référence à l'exemple, une fois la résine polymérisée, on retire la clé vestibulaire du modèle 14 avec les dents. On obtient alors un modèle 23 de l'armature 4 représentatif de l'armature 4 définitive, visible à la figure 4. La présence des découpes 9 sur les faces proximales 8, 80 des dents 1, 100 a permis à la résine de combler de manière optimale les espaces inter-dentaires, en formant un pont reliant les cavités 2, 200 des dents 1, 100. Il n'est plus nécessaire de reprendre ou de retoucher le modèle d'armature, ce dernier étant, de facto, optimal lorsque le matériau de comblement a durci.

A partir de ce modèle 23 d'armature et après vérification de la configuration géométrique de ce dernier, on réalise l'armature 4 définitive. Cette étape est obtenue par la mise en oeuvre de techniques connues en tant que telles, par exemple par la technique de la cire perdue, par la fabrication par CAO après numérisation du modèle 23 et d'une maquette ou par une autre technique connue. Par exemple, l'armature peut être réalisée par CFAO, à partir de représentations informatiques virtuelles des cavités des dents concernées. Ces représentations sont intégrées au fichier de CAO à partir de numérisations en 3D des dents réalisées par des techniques connues en soi. Ainsi, le fichier CAO comprend, de facto, la forme et les dimensions de la cavité de la dent, cela en négatif. Il est alors possible à ce fichier de servir de matrice pour réaliser l'armature par CAO. Avantageusement, un tel fichier intègre le traitement final et ainsi adapte, selon le matériau retenu, l'espace entre les dents au traitement final.

Grâce aux dents objet de l'invention, le modèle 23 d'armature est réalisé de manière simple, en minimisant les erreurs et sans nécessiter une haute qualification technique puisque la partie de l'armature 4 située entre deux dents 1, 100 est réalisée simplement par injection du matériau de comblement dans les cavités et les découpes des dents, ce dernier occupant l'ensemble de l'espace disponible lors du moulage. En d'autres termes, cette partie du modèle 23 correspondant à la partie de l'armature 4 dénommée bridge est faite avec une quantité de matière suffisante pour garantir la résistance de la prothèse et sans que le matériau constitutif de ce bridge soit visible sur la prothèse finie.

Une étape supplémentaire, connue en soi, de fabrication de la prothèse 5 consiste à mettre en place des dents artificielles définitives, qui sont couramment désignées par l'expression « matériau cosmétique », sur l'armature 4 précédemment réalisée. Il s'agit, par exemple, de dents en résine, telles que celles 1, 100 utilisées précédemment, qui sont mises en place sur l'armature 4.

En variante illustrée à la figure 6, on réalise des dents 24 en céramique « traditionnelle » sur l'armature 4. Du fait de la conformité précise de l'armature 4 avec l'anatomie de la bouche du patient, en particulier des espaces entre l'armature 4 et les dents ainsi que les espaces inter-dentaires, on optimise le contrôle de la rétraction de la céramique dentaire constitutive des dents 24 lors du montage de la prothèse, ce qui induit une meilleure répartition des contraintes mécaniques, cela avec des espaces inter-dentaires mieux dessinés et d'un aspect plus naturel.

Si, en variante non illustrée, on réalise des dents en céramique pressée, on utilise alors une clé de recouvrement total de l'arcade, c'est-à-dire un moulage des deux faces de l'arcade tel que décrit précédemment, pour définir un moule dans lequel on introduit une cire d'injection, par au moins deux orifices préalablement percés dans la clé. Une fois la cire solidifiée, on utilise un dispositif d'injection de céramique sous pression, connu en soi, pour réaliser les dents en céramique pressée.

L'invention permet de fabriquer, à un coût maitrisé et rapidement, une armature de prothèse dentaire sur implants, avec une résistance mécanique optimale.

## Revendications

1. Prothèse dentaire (5) sur implant (16) constituée d'une armature (4) maintenant au moins une dent artificielle (1 ; 100) qui est fixée sur un implant (16) et qui comprend une cavité ouverte (2 ; 200) sur sa face palatine (3) et au moins une découpe (9) ménagée dans au moins une face (8 ; 80), dite proximale, de la dent (1 ; 100), **caractérisée en ce que** ladite découpe (9) définit un passage continu entre les cavités (2 ; 200) de deux dents artificielles (1 ; 100) voisines dont les découpes (9) sont en regard et **en ce que**, dans cette configuration, les cavités (2 ; 200) et les découpes (9) des deux dents (1 ; 100) voisines définissent ensemble un logement de réception d'une partie du matériau constitutif de l'armature (4) lorsque lesdites dents artificielles (1 ; 100) sont en position sur l'armature (4).

2. Prothèse selon la revendication 1, **caractérisée en ce que** les deux faces proximales (8, 80) de la dent (1 ; 100) sont pourvues de découpes (9).

3. Prothèse selon l'une des revendications précédentes, **caractérisée en ce que** chaque découpe (9) est à fond arrondi (11), l'ouverture (10) de la découpe (9) étant située sur la face palatine (3) de la dent (1 ; 100).

4. Prothèse selon l'une des revendications précédentes, **caractérisée en ce que** les bords (12, 13) de chaque découpe (9) forment un angle voisin de 6°.

5. Procédé de réalisation d'une prothèse dentaire (5) sur implant (16) avec au moins une dent artificielle (1 ; 100) maintenue sur une armature (4), conforme à une des revendications précédentes et comportant au moins les étapes suivantes :
- a) positionner au moins deux dents artificielles (1 ; 100) sur un modèle de travail d'une arcade dentaire (14) d'un patient à équiper d'une prothèse, le modèle étant pourvu d'au moins un implant (16),
- b) à l'aide d'un premier matériau de moulage, mouler sur les dents en position sur le modèle de travail au moins un élément dit clé vestibulaire (21),
- c) placer les dents (1 ; 100) dans la clé vestibulaire (21) précédemment moulée,
- d) combler à l'aide d'un matériau de comblement les cavités (2 ; 200) et les découpes (9) des dents (1 ; 100) voisines afin de réaliser un modèle d'armature (23) homogène dont les espaces inter-dentaires sont prédéfinis par les cavités (2 ; 200) et les découpes (9) des dents (1 ; 100) voisines,
- e) réaliser l'armature (4) définitive à partir du modèle d'armature (23) précédemment réalisé.

6. Procédé selon la revendication 5, **caractérisé en ce que**, lors de l'étape a), les dents (1 ; 100) sont positionnées avec leurs faces (8 ; 80), pourvues des découpes (9), en regard.

7. Procédé selon l'une des revendications précédentes, **caractérisé en ce que**, lors de l'étape d), le matériau de comblement est une résine photo-polymérisable.

8. Procédé selon l'une des revendications précédentes, **caractérisé en ce que**, après l'étape b) et avant l'étape c), on moule lors d'une étape supplémentaire f), un deuxième élément des faces intérieure et extérieure de l'arcade dentaire.

9. Procédé selon l'une des revendications précédentes, **caractérisé en ce qu'**après l'étape e), on monte, lors d'une étape supplémentaire g), au moins une dent artificielle (1 ; 100) sur l'armature (4).

10. Procédé selon la revendication 9, **caractérisé en ce que** lors de l'étape g) on utilise le second élément moulé lors de l'étape f) pour monter au moins une dent artificielle en céramique pressée.

11. Procédé selon la revendication 9, **caractérisé en ce que** lors de l'étape g) on colle au moins une dent artificielle en céramique naturelle sur l'armature.
